# EUROPÄISCHE PATENTSCHRIFT

(11) **EP 2 872 541 B1**
(45) Veröffentlichungstag und Bekanntmachung des Hinweises auf die Patenterteilung: **02.08.2017**
(21) Anmeldenummer: 13735351.2
(22) Anmeldetag: 12.07.2013
(51) Int. Cl.: C08G 18/10, C08G 18/12, C08G 18/28, C08G 65/336

(54) **HOCHGEFÜLLTE ZUSAMMENSETZUNG AUF BASIS VON SILANTERMINIERTEN POLYMEREN**
HIGHLY FILLED COMPOSITION ON THE BASIS OF SILANE TERMINATED POLYMERS
COMPOSITION À HAUTE TENEUR EN CHARGE À BASE DE POLYMÈRES À TERMINAISON SILANE

(30) Priorität: 13.07.2012 EP 12176397
(43) Veröffentlichungstag der Anmeldung: 20.05.2015
(73) Patentinhaber: Sika Technology AG, 6340 Baar (CH)
(72) Erfinder: CHOFFAT, Fabien, CH-4522 Rüttenen (CH); NESTLER, Manuel, CH-8610 Uster (CH)
(74) Vertreter: Sika Patent Attorneys
(86) Internationale Anmeldenummer: PCT/EP2013/064848
(87) Internationale Veröffentlichungsnummer: WO 2014/009557

(56) Entgegenhaltungen:
- EP-A1- 2 103 648
- WO-A1-2008/145458
- DE-A1-102008 020 979
- US-A1- 2011 034 627
- US-B1- 6 440 573

## Beschreibung

### Technisches Gebiet

Die Erfindung betrifft feuchtigkeitshärtende Zusammensetzungen auf Basis silanfunktioneller Polymere mit einem hohen Gehalt an Füllstoffen, welche sich als Klebstoffe, Dichtstoffe oder Beschichtungen eignen.

### Stand der Technik

Feuchtigkeitshärtende Zusammensetzungen auf Basis von silanfunktionellen Polymeren sind bekannt und werden seit geraumer Zeit als elastische Klebstoffe, Dichtstoffe und Beschichtungen eingesetzt.

Abhängig vom Einsatzgebiet und den Anforderungen an solche Zusammensetzungen, einerseits bei der Applikation, andererseits nach Aushärtung, enthalten diese unterschiedliche Bestandteile.

Gewisse Anwendungen, beispielsweise Parkettverklebungen, Dachabdichtungen, Panel Bonding und dergleichen, verlangen dabei eine besonders hohe Härte der ausgehärteten Zusammensetzung, wobei die Härte des Endprodukts auf unterschiedliche Arten eingestellt werden kann.

Einerseits kann die Härte durch die Wahl der Polymermatrix erhöht werden, indem Polymere mit einem grossen Anteil an Hartsegmenten eingesetzt werden und/oder die Vernetzungsdichte erhöht wird. Diese Massnahme ist jedoch aufwendig, da die gesamte Formulierung der Zusammensetzung auf die neuen Bestendteile abgestimmt werden muss. Weiterhin sind derartige Modifikationen oftmals mit hohen Kosten verbunden.

Andererseits wäre es denkbar, die Härte einer ausgehärteten Zusammensetzung zu erhöhen, indem der Füllstoffgehalt in der Zusammensetzung erhöht wird.

Dem Einsatz von Füllstoffen in feuchtigkeitshärtenden Zusammensetzungen auf Basis von silanfunktionellen Polymeren sind jedoch Grenzen gesetzt. Gerade beim Einsatz von hohen Füllstoffmengen, wie sie zum Erreichen einer hohen Härte und zur Optimierung des Preises des Endprodukts erwünscht wären, tritt das Problem auf, dass sich die Zusammensetzung aufgrund der erhöhten Viskosität nicht mehr applizieren lässt. Dies ist insbesondere dann problematisch, wenn die Zusammensetzung von Hand, beispielsweise mittels Kartuschenpresse mit einem Spachtel appliziert werden soll. US6440573 offenbart eine feuchtigkeitshärtende Zusammensetzung umfassend ein silanterminiertes Polyurethan, einen Katalysator für die Vernetzung von Silangruppen und -65 Gew.-% Calciumcarbonat. Beispiel 6 offenbart ein ethanolabspaltendes Polymer in Verbindung mit einem Zinnkatalysator und einem methanolabspaltendem Silan.

### 5 Darstellung der Erfindung

Aufgabe der vorliegenden Erfindung ist es daher, eine feuchtigkeitshärtende Zusammensetzung auf Basis von silanfunktionellen Polymeren bereitzustellen, welche im ausgehärteten Zustand über eine verhältnismässig hohe Härte verfügt ohne dass die Applikationseigenschaften jedoch massgeblich beeinträchtigt werden.

Überraschenderweise wurde nun gefunden, dass Zusammensetzungen gemäss Anspruch 1 diese Aufgabe lösen.

Erfindungsgemässe Zusammensetzungen weisen im ausgehärteten Zustand ausgezeichnete Härten auf und lassen sich dennoch problemlos verarbeiten. Weiterhin weisen erfindungsgemässe Zusammensetzungen den Vorteil auf, dass sie aufgrund des ausserordentlich hohen Füllstoffgehalts kostengünstig zugänglich sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine feuchtigkeitshärtende Zusammensetzung umfassend
a) mindestens ein silanfunktionelles Polymer **P,**
b) mindestens einen Katalysator für die Vernetzung von silanfunktionellen Polymeren, sowie
c) mindestens 65 Gew.-% von mindestens einem Füllstoff,
wobei die Zusammensetzung im vollständig ausgehärteten Zustand eine Shore A Härte von ≥ 60, insbesondere von ≥ 65, bevorzugt von ≥ 70, bestimmt nach DIN 53505, aufweist und wobei der Katalysator für die Vernetzung von silanfunktionellen Polymeren ein Organotitanat oder ein Amidin oder eine Kombination dieser beiden ist, und wobei die Zusammensetzung keine Bestandteile enthält, welche bei der Aushärtung Methanol abspalten.
Die Messmethoden für die angegebenen Werte sind im Rahmen der Ausführungsbeispiele im Detail beschrieben.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.
Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).
Der Begriff "silanfunktionell" bezeichnet Verbindungen, die Silangruppen aufweisen. "Silanfunktionelle Polymere" sind demnach Polymere, welche mindestens eine Silangruppe aufweisen.
Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.
Unter "Molekulargewicht" versteht man im vorliegenden Dokument stets das Molekulargewichtsmittel Mₙ (Zahlenmittel).
Als "Raumtemperatur" wird im vorliegenden Dokument eine Temperatur von 23°C bezeichnet.

Die erfindungsgemässe Zusammensetzung enthält mindestens ein silanfunktionelles Polymer **P,** welches insbesondere Endgruppen der Formel (I) aufweist.

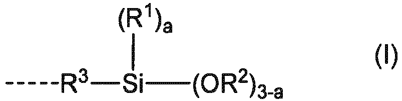

Dabei steht der Rest R¹ für einen linearen oder verzweigten, einwertigen Kohlenwasserstoffrest mit 1 bis 8 C-Atomen, insbesondere für eine Methyl- oder für eine Ethylgruppe.

Der Rest R² steht für einen Acylrest oder für einen linearen oder verzweigten, einwertigen Kohlenwasserstoffrest mit 1 bis 5 C-Atomen, insbesondere für eine Ethyl- oder für eine Isopropylgruppe. Für bestimmte Anwendungen steht der Rest R² bevorzugt für eine Ethylgruppe, da in diesem Fall bei der Aushärtung der Zusammensetzung ökologisch und toxikologisch harmloses Ethanol freigesetzt wird.
Der Index a steht für einen Wert von 0 oder 1 oder 2, insbesondere für einen Wert von 0.
Der Rest R³ steht für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist.

Innerhalb einer Silangruppe der Formel (I) stehen R¹ und R² jeweils unabhängig voneinander für die beschriebenen Reste.

In einer ersten Ausführungsform ist das silanfunktionelle Polymer **P** ein silanfunktionelles Polyurethanpolymer **P1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist. In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.
Bevorzugt ist das Aminosilan ein Aminosilan **AS** der Formel (II), 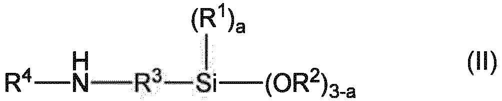 wobei R¹, R², R³ und a bereits vorhergehend beschrieben worden sind und R⁴ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (III) steht.

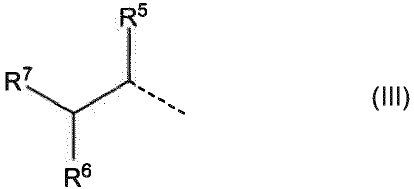

Dabei stehen die Reste R⁵ und R⁶ jeweils unabhängig voneinander für ein Wasserstoffatom oder für einen Rest aus der Gruppe bestehend aus -R⁸, -COOR⁸ und -CN.
Der Rest R⁷ steht für ein Wasserstoffatom oder für einen Rest aus der Gruppe bestehend aus -CH₂-COOR⁸, -COOR⁸, -CONHR⁸, -CON(R⁸)₂, -CN, -NO₂, -PO(OR⁸)₂, -SO₂R⁸ und -SO₂OR⁸.
Der Rest R⁸ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium, insbesondere mit Ethoxygruppen. Als Aminosilane **AS** besonders geeignet sind sekundäre Aminosilane, insbesondere Aminosilane **AS,** bei denen R⁴ in Formel (II) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.
Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.
Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.
Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.
Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.
Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.
Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.
Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole,

Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden. Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin-und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.
Beispielsweise sind geeignete silanfunktionelle Polymere P1 kommerziell erhältlich unter den Handelsnamen Polymer ST, beispielsweise Polymer ST50, von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.
Als Isocyanatosilan **IS** geeignet sind Verbindungen der Formel (IV). 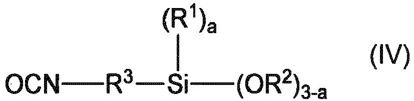 wobei R¹, R², R³ und a bereits vorhergehend beschrieben wurden.
Beispiele für geeignete Isocyanatosilane **IS** der Formel (IV) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium, insbesondere mit Ethoxygruppen.
Bevorzugt weist das Polymer als gegenüber Isocyanatgruppen reaktive funktionelle Endgruppen Hydroxylgruppen auf.
Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.
Andererseits eignen sich auch Hydroxylgruppen aufweisende, insbesondere Hydroxylgruppen terminierte, Polyurethanpolymere zur Umsetzung mit Isocyanatosilanen **IS** der Formel (IV). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.
Gegebenenfalls kann das Polyurethanpolymer unter Mitverwendung von Weichmachern hergestellt werden, wobei die verwendeten Weichmacher keine gegenüber Isocyanaten reaktive Gruppen enthalten.
Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.
Beispielsweise sind geeignete silanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland.

In einer dritten Ausführungsform ist das silanfunktionelle Polymer **P** ein silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren gesamte Offenbarung hiermit eingeschlossen ist. Beispielsweise sind geeignete silanfunktionelle Polymere **P3** kommerziell erhältlich unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan.

Üblicherweise ist das silanfunktionelle Polymer **P** in einer Menge von 5 bis 35 Gew.-%, insbesondere in einer Menge von 5 bis 25 Gew.-%, bevorzugt 7 bis 15 Gew.-%, meist bevorzugt 7 bis 12 Gew.-%, bezogen auf die gesamte Zusammensetzung, vorhanden.

Weiterhin umfasst die erfindungsgemässe Zusammensetzung mindestens einen Katalysator für die Vernetzung von silanfunktionellen Polymeren.

Insbesondere handelt es sich beim Katalysator um einen Metallkatalysator oder um eine stickstoffhaltige Verbindung.
Geeignete Metallkatalysatoren sind Verbindungen von Titan, Zirkonium, Aluminium oder Zinn, insbesondere Organozinnverbindungen, Organotitanate, Organozirkonate und Organoaluminate, wobei diese Metallkatalysatoren insbesondere Alkoxygruppen, Sulfonatgruppen, Carboxylgruppen, Dialkylphosphatgruppen, Dialkylpyrophosphatgruppen und Diketonatgruppen aufweisen. Besonders geeignete Organozinnverbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat und Dioctylzinndiacetylacetonat, sowie Alkylzinnthioester.
Besonders geeignete Organotitanate sind:
- Titan(IV)-Komplexverbindungen mit zwei 1,3-Diketonat-Liganden, insbesondere 2,4-Pentandionat (Acetylacetonat), und zwei Alkoholat-Liganden,
- Titan(IV)-Komplexverbindungen mit zwei 1,3-Ketoesterat-Liganden, insbesondere Ethylacetoacetat, und zwei Alkoholat-Liganden,
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden,
- Titan(IV)-Komplexverbindungen mit vier Alkoholat-Liganden, sowie
- höherkondensierte Organotitanate, insbesondere oligomeres Titan(IV)-tetrabutanolat, auch als Polybutyltitanat bezeichnet.

Als Alkoholat-Liganden insbesondere geeignet sind Isobutoxy, n-Butoxy, Isopropoxy, Ethoxy und 2-Ethylhexoxy.
Ganz besonders geeignet sind Bis(Ethylacetoacetato)-diisobutoxy-titan(IV), Bis(Ethylacetoacetato)-diisopropoxy-titan(IV), Bis(Acetylacetonato)-diisopropoxy-titan(IV), Bis(Acetylacetonato)-diisobutoxy-titan(IV), Tris(oxyethyl)amin-isopropoxy-titan(IV), Bis[tris(oxyethyl)amin]-diisopropoxy-titan(IV), Bis(2-Ethylhexan-1,3-dioxy)-titan(IV), Tris[2-((2-Aminoethyl)amino)ethoxy]-ethoxy-titan(IV), Bis(Neopentyl(diallyl)oxy-diethoxy-titan(IV), Titan(IV)-tetrabutanolat, Tetra-(2-ethylhexyloxy)titanat, Tetra-(isopropoxy)titanat und Polybutyltitanat. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Du Pont / Dorf Ketal); Tytan PBT, TET, X85, TAA, ET, S2, S4 oder S6 (alle von TensoChema) und Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals). Besonders geeignete Organozirkonate sind die kommerziell erhältlichen Typen Ken-React^{®} NZ^{®} 38J, KZ^{®} TPPJ, KZ^{®} TPP, NZ^{®} 01, 09, 12 38, 44 oder 97 (alle von Kenrich Petrochemicals) und Snapcure^{®} 3020, 3030, 1020 (alle von Johnson Matthey & Brandenberger).
Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyldimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Di-o-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.
Insbesondere geeignet sind auch Kombinationen verschiedener Katalysatoren, insbesondere Kombinationen aus mindestens einem Metallkatalysator und mindestens einer stickstoffhaltigen Verbindung.
Als Katalysator bevorzugt sind Organotitanate, Amine, Amidine, Guanidine und Imidazole. Besonders bevorzugt sind Organotitanate und Amidine.
Bevorzugt umfasst die Zusammensetzung bevorzugt keine Organozinnverbindungen für die Vernetzung der silanfunktionellen Polymere.

Handelt es sich beim silanfunktionellen Polymer **P** um eines, bei welchem R² für eine Ethylgruppe steht, so umfasst die Zusammensetzung bevorzugt ein Katalysatorsystem bestehend aus mindestens einem Organotitanat und mindestens einem Amidin. Auch in dieser Ausführungsform umfasst die Zusammensetzung bevorzugt keine Organozinnverbindungen für die Vernetzung der silanfunktionellen Polymere.

Der Anteil des Katalysators beträgt 0.01 bis 0.15 Gew.-%, insbesondere 0.05 bis 0.1 Gew.-%, bezogen auf die Gesamtzusammensetzung.

Weiterhin enthält die Zusammensetzung mindestens 65 Gew.-% von mindestens einem Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
Es ist durchaus möglich und kann sogar von Vorteil sein, eine Mischung verschiedener Füllstoffe einzusetzen. Für die erfindungsgemässe Zusammensetzung meist bevorzugt ist Calciumcarbonat (Kreide) als Füllstoff. Insbesondere liegt der Anteil an Füllstoff im Bereich von 67 bis 80 Gew.-%, bevorzugt 70 bis 76 Gew.-%, bezogen auf die gesamte Zusammensetzung. Meist bevorzugt umfasst die Zusammensetzung mehr als 70 Gew.-% Füllstoff, vorzugsweise 72 Gew.-% oder mehr.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Fettsäurealkylester, Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Insbesondere enthält die erfindungsgemässe Zusammensetzung mindestens einen Weichmacher, wobei der Anteil an Weichmacher 5 bis 20 Gew.-%, insbesondere 10 bis 17 Gew.-%, an der gesamten Zusammensetzung beträgt. Insbesondere enthält die erfindungsgemässe Zusammensetzung weiterhin mindestens einen Haftvermittler, insbesondere ein Aminosilan, wie es auch vorhergehend für die Herstellung des silanfunktionellen Polymers **P** beschreiben worden ist. Der Anteil des Haftvermittlers beträgt dabei vorzugsweise 0.01 bis 3 Gew.-% an der gesamten Zusammensetzung.
Weiterhin enthält die erfindungsgemässe Zusammensetzung vorzugsweise ein Netz- und/oder Dispergiermittel. Geeignete Netz- und/oder Dispergiermittel sind beispielsweise kommerziell erhältlich von BYK-Chemie GmbH oder bei Elementis Specialities unter den Produktnamen Nuosperse® erhältlich.
Der Anteil des Netz- und/oder Dispergiermittels beträgt vorzugsweise 0.2 bis 3 Gew-%, insbesondere 0.3 bis 1 Gew.-% bezogen auf die gesamte Zusammensetzung.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

In einer für gewisse Anwendungen, beispielsweise emissionsarme Kleb- und Dichtstoffe, bevorzugte Ausführungsform umfasst die erfindungsgemässe Zusammensetzung keine Bestandteile, welche bei der Aushärtung Methanol abspalten. Derartige Bestandteile sind neben dem silanfunktionellen Polymer **P** gegebenenfalls vorhandene reaktive Bestandteile wie beispielsweise Haftvermittler, Trocknungsmittel, Reaktivverdünner, Vernetzer und andere vorhergehend beschriebene Bestandteile. Bestandteile, welche bei der Aushärtung Methanol abspalten, sind typischerweise Methoxygruppen aufweisende, silanfunktionelle Verbindungen. Insbesondere umfasst also die erfindungsgemässe Zusammensetzung keine silanfunktionellen Verbindungen, welche Methoxysilangruppen aufweisen. Bevorzugt weisen sämtliche in der Zusammensetzung vorhandene silanfunktionelle Verbindungen Endgruppen der Formel (I) auf, wobei die Reste R¹, R² und R³ sowie der Index a bereits vorhergehend beschreiben worden sind.
Meist bevorzugt sind alle in der Zusammensetzung enthaltenen hydrolysierbaren Silangruppen Ethoxysilangruppen, insbesondere Triethoxysilangruppen.
In einer solchen Ausführungsform ist das silanfunktionelle Polymer **P** bevorzugt ein silanfuntionelles Polymer **P1** und weist als Silangruppen nur Triethoxysilangruppen auf. Weiterhin weisen gegebenenfalls vorhandene Silangruppen enthaltende Additive als Silangruppen nur Triethoxysilangruppen oder Alkyldiethoxysilangruppen, insbesondere Methyl- oder Ethyldiethoxysilangruppen, bevorzugt Triethoxysilangruppen, auf.

In einer besonders bevorzugten Ausführungsform umfasst die erfindungsgemässe Zusammensetzung
5 bis 15 Gew.-% eines silanfunktionellen Polymers **P,** insbesondere eines silanfunktionellen Polyurethanpolymers **P1,**
70 bis 80 Gew.-% Calciumcarbonat als Füllstoff,
5 bis 20 Gew.-% mindestens eines Weichmachers, insbesondere eines phthalatfreien Weichmachers, bevorzugt eines Fettsäurealkylesters, sowie mindestens einen Katalysator für die Vernetzung des silanfunktionellen Polymers, insbesondere ein Organotitanat und/oder ein Amidin,
wobei die Zusammensetzung im vollständig ausgehärteten Zustand, d.h. nach einer Aushärtung der Zusammensetzung während 7 Tagen bei 23°C und 50% relativer Luftfeuchtigkeit, eine Shore A Härte von ≥ 60, bestimmt nach DIN 53505, aufweist und vor der Aushärtung insbesondere eine Auspresskraft von ≤ 1000 N, bevorzugt ≤ 800 N aufweist.
Die Messmethoden für die angegebenen Werte sind im Rahmen der Ausführungsbeispiele im Detail beschrieben.

Eine derartige Zusammensetzung eignet sich besonders gut als Parkettklebstoff. Insbesondere enthält die Zusammensetzung keine Organozinnverbindung als Katalysator für die Vernetzung von silanfunktionellen Polymeren. Weiterhin weist eine derartige Zusammensetzung vorzugsweise keine Bestandteile auf, welche bei der Aushärtung Methanol abspalten. Weiterhin ist der Klebstoff bevorzugt frei von phtalathaltigen Weichmachern.

Es ist vorteilhaft, alle genannten, in der Zusammensetzung gegebenenfalls vorhandenen Bestandteile, insbesondere Füllstoff und Katalysator- bzw. Beschleunigersystem, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur unwesentlich verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der beschriebenen Zusammensetzung auf mindestens einen Festkörper oder Artikel kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren oder Beschleunigern beschleunigt werden können, härtet die Zusammensetzung schliesslich aus. Dieser Prozess wird auch als Vernetzung bezeichnet. Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste.

Weiterhin umfasst die vorliegende Erfindung die Verwendung einer vorhergehend beschriebenen Zusammensetzung als feuchtigkeitshärtender Klebstoff, Dichtstoff oder Beschichtung. Die erfindungsgemässe Zusammensetzung eignet sich insbesondere für die Applikation auf Beton, Mörtel, Backstein, Ziegel, Gips, ein Naturstein wie Granit oder Marmor, Glas, Glaskeramik, Metall oder Metalllegierung, Holz, Kunststoff und Lack.
Bevorzugt ist die Verwendung der Zusammensetzung als Parkettklebstoff, beispielsweise für Massivparkett, Stabparkett (Nut und Feder), Lamparkett, Industrieparkett, Dielen, Mosaikparkett, Holzpflaster sowie Holzspanplatten, vorzugsweise für die vollflächige Verklebung.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, beispielsweise aus einer Kartusche oder mittels Zahnspachtel aus einem grösseren Gebinde. Eine erfindungsgemässe Zusammensetzung mit guten Applikationseigenschaften weist eine hohe Standfestigkeit und einen kurzen Fadenzug sowie tiefe Viskosität bzw. Auspresskraft auf. Das heisst, sie lässt sich mit dem Zahnspachtel mit wenig Kraft verstreichen, bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.
Die erfindungsgemässe Zusammensetzung wird insbesondere in einem Temperaturbereich zwischen 5 und 45°C, bevorzugt im Bereich der Raumtemperatur, aufgetragen und härtet auch bei diesen Bedingungen aus.

Weiterhin betrifft die Erfindung eine ausgehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.
Die ausgehärtete Zusammensetzung weist dabei eine Shore A Härte von ≥ 60, insbesondere von ≥ 65, bevorzugt von ≥ 70, bestimmt nach DIN 53505 auf. Bevorzugt weist die ausgehärtete Zusammensetzung eine Dichte von ≥ 1.75 kg/l, insbesondere von ≥ 1.8 kg/l, bevorzugt von ≥ 1.85 kg/l, gemessen nach DIN 53 479 auf.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit** und die **Bruchdehnung** wurden nach DIN 53504 (Zuggeschwindigkeit: 200 mm/min) an während 7 Tagen bei 23°C und 50% relativer Luftfeuchtigkeit ausgehärteten Filmen mit einer Schichtdicke von 2 mm bestimmt.

Die **Shore A-Härte** wurde bestimmt nach DIN 53505, an während 7 Tagen bei 23°C und 50% relativer Luftfeuchtigkeit ausgehärteten Probekörpern mit einer Schichtdicke von 6 mm.

Die **Hautbildungszeit** (Zeit bis zur Klebefreiheit, "tack-free time") wurde bei 23°C und 50% relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels Finger erstmals keine Rückstände auf dem Finger mehr zurückblieben.

Für die Bestimmung der **Auspresskraft** wurden die Zusammensetzungen in innenlackierte Aluminiumkartuschen (Durchmesser aussen 46.9 mm, Durchmesser innen 46.2 mm Länge 215 mm, Öffnung 15-M) gefüllt und mit einem Polyethlyen Stopfen (Durchmesser 46.1 mm) von Novelis Deutschland GmbH luftdicht verschlossen. Nach einer Konditionierung von 24 Stunden bei 23°C wurden die Kartuschen geöffnet und mittels Auspressgerät ausgepresst. Dafür wurde eine Düse mit einer 2 mm Innendurchmesser-Öffnung auf das Kartuschengewinde aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Die **Dichte** wurde bestimmt nach DIN 53 479.

### Herstellung_des silanfunktionellen Polyurethanpolymers SH1

Unter Stickstoffatmosphäre wurden 5687 g Polyol Acclaim^{®} 4200 (Bayer MaterialScience AG, Deutschlandn712 g Desmodur 44 MC L und 0.6g DABCO 33 LV unter stetigem Rühren auf 80 °C aufgeheizt und bei dieser Temperatur belassen. Nach einer Stunde Reaktionszeit wurde mittels Titration ein freier Gehalt an Isocyanatgruppen von 1.9 Gew.-% erreicht. Anschliessend wurden1070 g N-(3-Trimethoxysilyl-propyl)-amino-bernsteinsäure-diethylester beigefügt und für weitere 2 Stunden bei 80 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23°C) abgekühlt und unter Ausschluss von Feuchtigkeit aufbewahrt. Das so hergestellte silanfunktionelle Polyurethanpolymer ***SH*** ist bei Raumtemperatur flüssig. N-(3-Trimethoxysilyl-propyl)-amino-bernsteinsäure-diethylester wurde wie folgt hergestellt: 51.0 g 3-Aminopropyl-trimethoxysilan (Silquest^{®} A-1110, Momentive Performance Materials Inc., USA) wurden vorgelegt. Unter gutem Rühren wurden bei Raumtemperatur langsam 49.0 g Maleinsäure-diethylester (Fluka Chemie GmbH, Schweiz) zugegeben und die Mischung während 2 Stunden bei Raumtemperatur gerührt.

### Herstellung des silanfunktionellen Polyurethanpolymers mit Ethoxy-Endgruppen SH2

Unter Stickstoffatmosphäre wurden 5687 g Polyol Acclaim® 4200 (Bayer MaterialScience AG, Deutschland 712 g Desmodur 44 MC L und 0.6g DABCO 33 LV unter stetigem Rühren auf 80 °C aufgeheizt und bei dieser Temperatur belassen. Nach einer Stunde Reaktionszeit wurde mittels Titration ein freier Gehalt an Isocyanatgruppen von 1.9 Gew.-% erreicht. Anschliessend wurden 1200 g N-(3-Triethoxysilyl-propyl)-amino-bernsteinsäure-diethylester beigefügt und für weitere 2 Stunden bei 80 °C weitergerührt. Die Reaktion wurde abgebrochen, sobald kein freies Isocyanat mehr mittels IR-Spektroskopie (2275 2230 cm-1) nachzuweisen war. Das Produkt wurde auf Raumtemperatur (23°C) abgekühlt und unter Ausschluss von Feuchtigkeit aufbewahrt. Das so hergestellte silanfunktionelle Polyurethanpolymer SH ist bei Raumtemperatur flüssig.

Das reaktive (N-(3-Triethoxysilyl-propyl)-amino-bernsteinsäurediethylester) wurde wie folgt hergestellt: 100 g 3-Aminopropyltriethoxysilan (Dynasylan^{®} AMEO von Evonik Degussa GmbH, Deutschland) wurden vorgelegt. Unter gutem Rühren wurden bei Raumtemperatur langsam 77.8 g Maleinsäure-diethylester (Fluka Chemie GmbH, Schweiz) zugegeben und die Mischung während 12 Stunden bei 60°C gerührt.

### Herstellung des Thixotropierungsmittels TM

In einem Vakuummischer wurden 1000 g hydriertes Diisononylphthalat (Hexamol^{®} DINSCH, BASF) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel ***TM*** enthält 20 Gew.-% Thixotropierungsmittel in 80 Gew.-% Diisodecylphthalat.

### Herstellung der Klebstoffe

In einem Vakuummischer wurden entsprechend den in der Tabellen 1 angegebenen Gewichtsteilen das silanfunktionelle Polymer ***SH1*** bzw. ***SH2,*** Weichmacher auf Basis von Rapsölmethylester, das Netzmittel,Thixotropierungsmittel ***TM*** und Vinyltrimethoxysilan bzw. Vinyltriethoxysilan (Trocknungsmittel, Silquest^{®} A-171 von Momentive Performance Materials bzw. Dynasylan^{®} VTEO von Evonik Degussa GmbH) während 5 Minuten gut vermischt. Anschliessend wurde gemahlene Kreide (Omyacarb® 5-GU, Omya AG, Schweiz) während 15 Minuten bei 60°C eingeknetet. Bei ausgeschalteter Heizung wurden anschliessend N-(2-Aminoethyl)-(3-aminopropyl)trimethoxysilan bzw. 3-Aminopropyltriethoxysilan (Haftvermittler, Silquest^{®} A-1110 von Momentive Performance Materials Inc. bzw. Dynasylan^{®} AMEO von Evonik Degussa GmbH), Katalysator (1,8-Diazabicyclo[5.4.0]undec-7-en (DBU) alleine bzw. zusammen mit Titanat Tyzor® IBAY von DuPont) unter Vakuum während 10 Minuten zu einer homogenen Paste verarbeitet. Diese wurde dann in innenlackierte Aluminium-Spreizkolbenkartuschen abgefüllt.

**Tabelle 1: Zusammensetzungen in Gewichtsteilen und Resultate, n.m.: nicht messbar (Zusammensetzung konnte nicht aus Kartusche ausgepresst werden). Beispiel 10 ist erfindungsgemäss.**

| | ***1*** | ***2*** | ***3*** | ***4*** | ***5*** | ***6*** | ***7*** | ***8*** | ***9*** | ***10*** |
|---|---|---|---|---|---|---|---|---|---|---|
| Omyacarb 5 GU | 70 | 70 | 70 | 70 | 72 | 76 | 70 | 72 | 72 | 70 |
| Netzmittel | - | 0.1 | 0.3 | 0.9 | 0.3 | 0.3 | 1.5 | 0.3 | 0.3 | 0.3 |
| Weichmacher | 12 | 11.9 | 11.7 | 11.1 | 14.5 | 14.5 | 10.5 | | | 11.7 |
| Diisooctyladipat | | | | | | | | 15.5 | | |
| Solusolv^{®} 2075 | | | | | | | | | 15.5 | |
| ***SH1*** | 10 | 10 | 10 | 10 | 11.2 | 7.2 | 10 | 10.2 | 10.2 | |
| ***SH2*** | | | | | | | | | | 10 |
| ***TM*** | 6 | 6 | 6 | 6 | | | 6 | | | 6 |
| Silquest^{®} A-171 | 1.5 | 1.5 | 1.5 | 1.5 | 1.5 | 1.5 | 1.5 | 1.5 | 1.5 | |
| Dynasylan^{®}VTEO | | | | | | | | | | 1.5 |
| Silquest^{®} A-1110 | 0.5 | 0.5 | 0.5 | 0.5 | 0.5 | 0.5 | 0.5 | 0.5 | 0.5 | |
| Dynasylan^{®}AMEO | | | | | | | | | | 0.5 |
| DBU | 0.04 | 0.04 | 0.04 | 0.04 | 0.03 | 0.03 | 0.04 | 0.04 | 0.04 | 0.04 |
| Tyzor^{®} IBAY | | | | | | | | | | 0.5 |
| | | | | | | | | | | |
| Zugfestigkeit [MPa] | n.m. | n.m. | 1.3 | 0.7 | 1.4 | 1.7 | 0.6 | 1.3 | 1.5 | 1.5 |
| Bruchdehnung [%] | n.m. | n.m. | 40 | 54 | 27 | 23 | 160 | 28 | 25 | 45 |
| Shore A | n.m. | n.m. | 70 | 60 | 79 | 79 | 44 | 75 | 78 | 71 |
| Hautbildungszeit [min] | n.m. | n.m. | 20 | 50 | 25 | 25 | 60 | 20 | 30 | 40 |
| Auspresskraft [N] | n.m. | n.m. | 465 | 597 | 737 | 803 | 660 | 615 | 789 | 508 |
| Dichte [kg/l] | 1.79 | 1.79 | 1.79 | 1.79 | 1.83 | 1.90 | 1.79 | 1.83 | 1.83 | 1.79 |

## Patentansprüche

1. Feuchtigkeitshärtende Zusammensetzung umfassend
a) mindestens ein silanfunktionelles Polymer P,
b) mindestens einen Katalysator für die Vernetzung von silanfunktionellen Polymeren, sowie
c) mindestens 65 Gew.-% von mindestens einem Füllstoff,
wobei die Zusammensetzung im vollständig ausgehärteten Zustand eine Shore A Härte von ≥ 60, bestimmt nach DIN 53505, aufweist, und wobei der Katalysator für die Vernetzung von silanfunktionellen Polymeren ein Organotitanat oder ein Amidin oder eine Kombination dieser beiden ist, und wobei die Zusammensetzung keine Bestandteile enthält, welche bei der Aushärtung Methanol abspalten.

2. Feuchtigkeitshärtende Zusammensetzung gemäss Anspruch 1, **dadurch gekennzeichnet, dass** das silanfunktionelle Polymer **P** ausgewählt ist aus
- einem silanfunktionellen Polyurethanpolymer **P1,** erhältlich durch die Umsetzung eines Silans mit mindestens einer gegenüber Isocyanatgruppen reaktiven Gruppe mit einem Isocyanatgruppen aufweisenden Polyurethanpolymer,
- einem silanfunktionellen Polyurethanpolymer **P2,** erhältlich durch die Umsetzung eines Isocyanatosilans **IS** mit einem Polymer, welches gegenüber Isocyanatgruppen reaktive funktionelle Endgruppen aufweist, oder
- einem silanfunktionellen Polymer **P3,** erhältlich durch eine Hydrosilylierungsreaktion von Polymeren mit endständigen Doppelbindungen.

3. Feuchtigkeitshärtende Zusammensetzung gemäss einem der vorhergehenden Ansprüche, **dadurch gekennzeichnet, dass** die Zusammensetzung keine Organozinnverbindungen für die Vernetzung der silanfunktionellen Polymere enthält.

4. Feuchtigkeitshärtende Zusammensetzung gemäss einem der vorhergehenden Ansprüche, **dadurch gekennzeichnet, dass** die Zusammensetzung keine phthalathaltigen Weichmacher enthält.

5. Feuchtigkeitshärtende Zusammensetzung gemäss einem der vorhergehenden Ansprüche, **dadurch gekennzeichnet, dass** die Zusammensetzung einen Fettsäurealkylester als Weichmacher enthält.

6. Feuchtigkeitshärtende Zusammensetzung gemäss einem der vorhergehenden Ansprüche, **dadurch gekennzeichnet, dass** die Zusammensetzung zusätzlich ein Netz- und/oder Dispergiermittel enthält.

7. Feuchtigkeitshärtende Zusammensetzung gemäss einem der vorhergehenden Ansprüche, **dadurch gekennzeichnet, dass** die Zusammensetzung nach der Aushärtung eine Dichte von ≥ 1.75 kg/l aufweist.

8. Feuchtigkeitshärtende Zusammensetzung gemäss Anspruch 1, umfassend
bis 15 Gew.-% eines silanfunktionellen Polymers **P,** insbesondere eines silanfunktionellen Polyurethanpolymers **P1,**
70 bis 80 Gew.-% Calciumcarbonat als Füllstoff,
5 bis 20 Gew.-% mindestens eines Weichmachers, insbesondere eines Fettsäurealkylesters, sowie
mindestens einen
Katalysator für die Vernetzung des silanfunktionellen Polymers,
wobei die Zusammensetzung im vollständig ausgehärteten Zustand eine Shore A Härte von ≥ 60, bestimmt nach DIN 53505, aufweist und vor der Aushärtung insbesondere eine Auspresskraft von ≤ 1000 N, bestimmt mittels der in der Beschreibung angegebenen Methode, aufweist.

9. Verwendung einer feuchtigkeitshärtenden Zusammensetzung gemäss einem der Ansprüche 1 bis 8 als Klebstoff, Dichtstoff oder Beschichtung.

10. Verwendung gemäss Anspruch 9 als Parkettklebstoff

11. Ausgehärtete Zusammensetzung erhältlich aus einer Zusammensetzung gemäss einem der Ansprüche 1 bis 8 nach deren Härtung mit Wasser.

12. Ausgehärtete Zusammensetzung gemäss Anspruch 11, **dadurch gekennzeichnet, dass** ausgehärtete Zusammensetzung eine Shore A Härte von ≥ 60, bestimmt nach DIN 53505 aufweist.

13. Ausgehärtete Zusammensetzung gemäss einem der Ansprüche 11 und 12, **dadurch gekennzeichnet, dass** die ausgehärtete Zusammensetzung eine Dichte von ≥ 1.75 kg/l gemessen nach DIN 53 479 aufweist.

## Claims

1. A moisture-cure composition, comprising
a) at least one silane-functional polymer **P,**
b) at least one catalyst for the cross-linking of silane functional polymers, and
c) at least 65% by weight of at least one filler,
wherein the composition in the fully cured state has a Shore A hardness of ≥ 60, determined according to DIN 53505,
and wherein the catalyst for the cross-linking of silane functional polymers is an organotitanate or an amidine or a combination of the two,
and wherein the composition contains no constituents that split off methanol when curing.

2. The moisture-cure composition according to claim 1, **characterized in that** the silane functional polymer **P** is selected from
- a silane-functional polyurethane polymer **P1** obtainable by reacting a silane having at least one group that is reactive toward isocyanate groups with a polyurethane polymer containing isocyanate groups,
- a silane functional polyurethane polymer **P2** obtainable by reacting an isocyanatosilane **IS** with a polymer containing functional end groups that are reactive toward isocyanate groups, or
- a silane functional polymer **P3** obtainable by a hydrosilylation reaction of polymers with terminal double bonds.

3. The moisture-cure composition according to one of the preceding claims, **characterized in that** the composition contains no organotin compounds for cross-linking the silane functional polymers.

4. The moisture-cure composition according to one of the preceding claims, **characterized in that** the composition contains no phthalate-containing plasticizers.

5. The moisture-cure composition according to one of the preceding claims, **characterized in that** the composition contains a fatty acid alkyl ester as a plasticizer.

6. The moisture-cure composition according to one of the preceding claims, **characterized in that** the composition also contains a wetting agent and/or dispersant.

7. The moisture-cure composition according to one of the preceding claims, **characterized in that** following curing the composition has a density of ≥ 1.75 kg/l.

8. The moisture-cure composition according to claim 1, comprising
up to 15% by weight of a silane functional polymer **P,** especially a silane functional polyurethane polymer **P1**, 70 to 80% by weight of calcium carbonate as filler, 5 to 20% by weight of at least one plasticizer, especially a fatty acid alkyl ester, and
at least one catalyst for cross-linking the silane functional polymer,
wherein the composition in the fully cured state has a Shore A hardness of ≥ 60, determined according to DIN 53505, and prior to curing, in particular, has an extrusion force of ≤ 1000 N, determined by the method stated in the description.

9. Use of a moisture-cure composition according to one of claims 1 to 8 as adhesive, sealant or coating.

10. Use according to claim 9 as a parquet adhesive.

11. A cured composition obtainable from a composition according to one of claims 1 to 8 after its curing with water.

12. The cured composition according to claim 11,
**characterized in that** the cured composition has a Shore A hardness of ≥ 60, determined according to DIN 53505.

13. The cured composition according to one of claims 11 and 12, **characterized in that** the cured composition has a density of ≥ 1.75 kg/l, measured according to DIN 53479.

## Revendications

1. Composition durcissant à l'humidité, comprenant
a) au moins un polymère à fonction silane P,
b) au moins un catalyseur pour la réticulation de polymères à fonction silane, et
c) au moins 65 % en poids d'au moins une charge,
la composition présentant à l'état entièrement durci une dureté Shore A ≥ 60, déterminée selon DIN 53505, et le catalyseur pour la réticulation de polymères à fonction silane étant un organotitanate ou une amidine ou une combinaison des deux, et la composition ne contenant pas de constituants qui libèrent du méthanol lors du durcissement.

2. Composition durcissant à l'humidité selon la revendication 1, **caractérisée en ce que** le polymère à fonction silane P est choisi parmi
- un polymère de polyuréthane à fonction silane P1, pouvant être obtenu par la mise en réaction d'un silane comprenant au moins un groupe réactif avec les groupes isocyanate avec un polymère de polyuréthane comprenant des groupes isocyanate,
- un polymère de polyuréthane à fonction silane P2, pouvant être obtenu par la mise en réaction d'un isocyanatosilane IS avec un polymère qui comprend éventuellement des groupes terminaux fonctionnels réactifs avec les groupes isocyanate, ou
- un polymère à fonction silane P3, pouvant être obtenu par une réaction d'hydrosilylation de polymères contenant des doubles liaisons terminales.

3. Composition durcissant à l'humidité selon l'une quelconque des revendications précédentes, **caractérisée en ce que** la composition ne contient pas de composés d'organoétain pour la réticulation des polymères à fonction silane.

4. Composition durcissant à l'humidité selon l'une quelconque des revendications précédentes, **caractérisée en ce que** la composition ne contient pas de plastifiants contenant des phtalates.

5. Composition durcissant à l'humidité selon l'une quelconque des revendications précédentes, **caractérisée en ce que** la composition contient un ester alkylique d'acide gras en tant que plastifiant.

6. Composition durcissant à l'humidité selon l'une quelconque des revendications précédentes, **caractérisée en ce que** la composition contient en outre un agent mouillant et/ou un dispersant.

7. Composition durcissant à l'humidité selon l'une quelconque des revendications précédentes, **caractérisée en ce que** la composition présente après le durcissement une densité ≥ 1,75 kg/l.

8. Composition durcissant à l'humidité selon la revendication 1, comprenant :
jusqu'à 15 % en poids d'un polymère à fonction silane P, notamment d'un polymère de polyuréthane à fonction silane P1,
70 à 80 % en poids de carbonate de calcium en tant que charge,
5 à 20 % en poids d'au moins un plastifiant, notamment d'un ester alkylique d'acide gras, et
au moins un catalyseur pour la réticulation du polymère à fonction silane,
la composition présentant à l'état entièrement durci une dureté Shore A ≥ 60, déterminée selon DIN 53505, et présentant avant le durcissement notamment une force d'extrusion ≤ 1 000 N, déterminée par la méthode indiquée dans la description.

9. Utilisation d'une composition durcissant à l'humidité selon l'une quelconque des revendications 1 à 8 en tant qu'adhésif, agent d'étanchéité ou revêtement.

10. Utilisation selon la revendication 9 en tant qu'adhésif pour parquet.

11. Composition durcie pouvant être obtenue à partir d'une composition selon l'une quelconque des revendications 1 à 8 après son durcissement avec de l'eau.

12. Composition durcie selon la revendication 11, **caractérisée en ce que** la composition durcie présente une dureté Shore A ≥ 60, déterminée selon DIN 53505.

13. Composition durcie selon l'une quelconque des revendications 11 et 12, **caractérisée en ce que** la composition durcie présente une densité ≥ 1,75 kg/l mesurée selon DIN 53479.
